# EUROPEAN PATENT SPECIFICATION

(11) **EP 4 352 452 B1**
(45) Date of publication and mention of the grant of the patent: **01.07.2026**
(21) Application number: 22728658.0
(22) Date of filing: 29.04.2022
(51) Int. Cl.: G01B 11/275, B62D 15/02

(54) **IMPROVED METHOD AND SYSTEM FOR MONITORING WHEELS**
VERBESSERTES VERFAHREN UND SYSTEM ZUR ÜBERWACHUNG VON RÄDERN
PROCÉDÉ ET SYSTÈME AMÉLIORÉS DE SURVEILLANCE DE ROUES

(30) Priority: 07.06.2021 HU 2100215
(43) Date of publication of application: 17.04.2024
(73) Proprietor: Vie Technology (Europe) Kft., 1117 Budapest (HU)
(72) Inventor: RAPP, Tamás, 1117 Budapest (HU); RÓZSA, Tamás, 1173 Budapest (HU); LUKÁCS, Márton, 1116 Budapest (HU)
(74) Representative: Danubia Patent & Law Office LLC
(86) International application number: PCT/HU2022/050036
(87) International publication number: WO 2022/259000

(56) References cited:
- DE-A1- 102019 006 957
- US-A1- 2016 353 049
- US-B2- 9 862 417

## Description

The invention relates to a system and method for monitoring wheels. More specifically, the invention relates to a method and system for automatically determining orientation and/or fault of wheels with improved accuracy, especially on a moving vehicle.

Automatically monitoring wheels of a vehicle is a good way to improve road safety by providing a basis for more accurate steering and for automatic detection of failures.

An ideal steering system provides an unequivocal relation between the orientation of the steering wheel and the orientation of the steered wheel. In reality, however, mechanical characteristics of the steering system, wear or damage of certain mechanical elements and possible calibration errors cause a discrepancy between the steering wheel orientation and the steered wheel orientation. These effects produce the so-called steering deadband. In order to improve driving safety, the extent of this discrepancy has to be observed and compensated for. In manually driven cars without electronic driving aids, this is performed manually. When electronic automatic control systems are included in a vehicle, the observation of the deadband and the corresponding correction is preferably performed automatically. Though it would be possible to observe and input the value of the deadband manually, an automated system is far more reliable. In the case of autonomous self-driving vehicles, a human driver is not available and thus the safe operation of the vehicle requires automatic feedback on the actual operation the steering system, e.g., by active observation of the orientation of the steered wheels.

During operation of a vehicle, a steered wheel is rotated around a steering axis by a steering angle relative to a neutral position. The steering axis is usually slightly offset from vertical by the caster angle and by the steering axis inclination. The direction of movement of the vehicle is based on the steering angle, but also depends on the caster angle, the steering axis inclination, the distance between the steered wheels and further wheel of the vehicle and the orientation of the further wheels, possibly also steered. The driver of the vehicle usually interacts with the steering wheel to provide a steering demand. In power assisted or steer-by-wire solutions the steering demand, i.e. the position of the steering wheel is measured by a steering angle sensor that most often operates on a magnetic principle. In driverless applications, the steering demand is provided by a computer system that may be on-board the vehicle or may be a remote controller. The actual steering angle may be determined by measuring the actual orientation of the steered wheels by electric, magnetic, electromagnetic or ultrasonic proximity sensors arranged at said wheels, or by observing the turning of the vehicle relative to its surroundings on the basis of its environmental sensors, e.g., optical sensors.

US 9,862,417 B1 discloses a method for optical determination and subsequent correction of steering angle. A camera arranged on an outside surface of the vehicle records an image of at least one of the steered wheels and then the actual steering angle is determined by calculating a degree of coincidence between the image made by the camera and a reference image or alternatively by determining a parameter of an ellipse detected on the recorded image and determining a degree of coincidence between the determined parameter and a reference parameter. A steering angle correction value is subsequently calculated based on the degree of coincidence. A further method is disclosed for identifying a steering angle neutral point when both steered wheels face forward minus the tracking (toe in or toe out), by determining the degree of symmetry between the images of the left and the right steered wheel. These methods are especially suited for providing a parking assistance by showing on a display device of the vehicle a superimposed image of the predicted position of the vehicle and an image of the surroundings made by a rear camera, wherein the predicted position corresponds to the actual steering angle determined by the methods.

The methods disclosed in US 9,862,417 B1 have their limitations, however. The measurement accuracy of the actual steering angle depends heavily on the omitted expectation that the relative arrangement of the steered wheel and the observing camera is fixed and is the same as their arrangement when the reference images or reference parameters are determined. In the case of parking assistance, these expectations are mostly satisfied due to the low speed of the vehicle and the low dynamics of the involved maneuvers.

The invention is based on the recognition that the accuracy and reliability of the monitoring may be greatly improved by compensating for variations in the relative arrangement of the camera and the observed wheels. These variations may be the result of a number of different permanent and temporary effects. Permanent effects are for example the mechanical adjustments of the suspension and steering, including the height, hardness, tracking (also known as toe), camber angle, and the replacement of the wheel or tire with a wheel or tire having different parameters, such as rim size or tire size. Temporary effects include vertical movement of the wheel due to irregularities of the ground or road surface, changes of the actual height of the camera relative to the wheel due to different weight of the load and corresponding different compression of the suspension springs and tilting of the body of the vehicle relative to the wheels either laterally due to wind or inertial effects of turning or longitudinally due to inertial effects of acceleration and deceleration or the slope of the road. The inertial effects and the effect of wind are larger in the case of larger vehicles, especially tractors for semi-trailers (from now on referred to as lorries or simply as tractors), whose cabins have their own suspension and thus can move relative to the chassis. Thus, a cabin-mounted camera is affected by not only relative movement of the wheel and chassis but also by the relative movement of the cabin and the chassis. In the case of larger vehicles, such as trucks and lorries, improvement of road safety features is even more important, because accidents involving larger vehicles tend to cause much higher monetary and personal damage.

A further significant recognition is that by improving the accuracy of the monitoring, several different road safety functions may be performed by the same system, resulting in cost-efficient system with additional safety.

Accordingly, the objective of the present invention is to provide a method and system for monitoring wheels and automatically determining their orientation and/or fault with increased accuracy and improved reliability, especially on moving vehicles.

The above objective has been achieved on one hand by a method for monitoring at least one wheel of a vehicle according to the features of claim 1 and on other hand by a system for monitoring at least one wheel of a vehicle according to the features of claim 12, respectively. Preferred variations of the method and preferred embodiments of the system, respectively, are indicated in the dependent claims.

In what follows, the invention, especially preferred exemplary embodiments thereof are described in detail with reference to the accompanying drawings, wherein
- Figures 1A-1C show an embodiment of the system according to the invention mounted on a lorry in front-, side-, and top views;
- Figures 2A-2B illustrate a prior art solution for determining steering angle of a steered wheel;
- Figure 3 shows a block diagram of a preferred embodiment of the system according to the invention with its connections with further elements of a steering system;
- Figure 4 shows a flow chart of a preferred variant of the method according to the invention;
- Figure 5 shows a flow chart of a preferred variant of the method according to the invention.

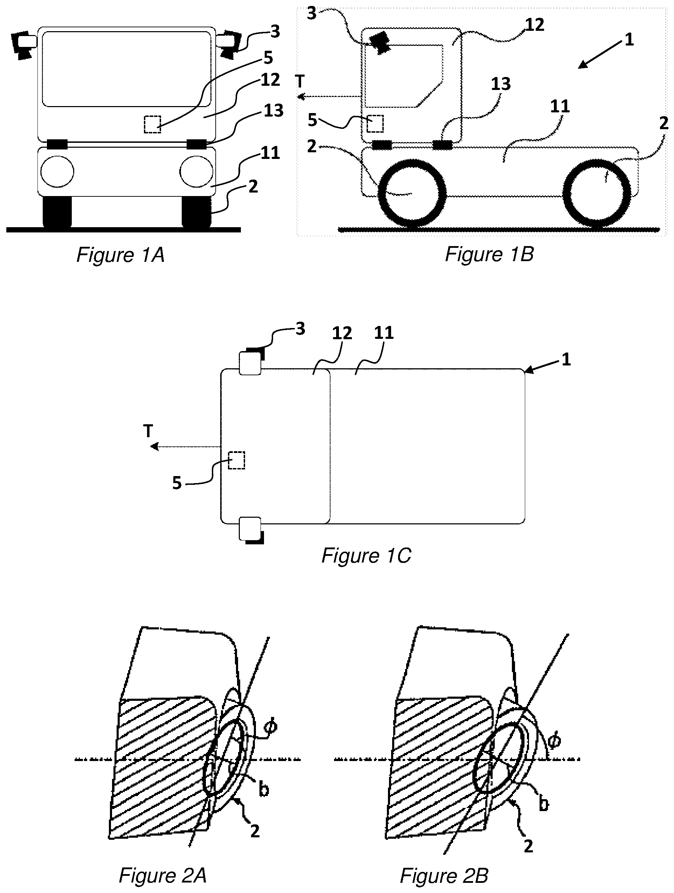

Figures 1A-1C show an embodiment of the system according to the invention mounted on a vehicle 1 in front-, side-, and top views, respectively. In this example the vehicle 1 is a lorry and at least a steered wheel 2 of the vehicle 1 is observed by a camera 3 that is in data communication with a processing unit 5. The data communication may be wired or wireless. The lorry according to the example comprises a chassis 11 and a cabin 12 which are connected via suspension elements 13 of the cabin 12. The suspension elements 13 increase the comfort of a human driver, but also increase the movement of the cabin 12 relative to the wheels 2 and thus increase the movement of the camera 3 relative to the wheel 2. In this example two cameras 3 are used, one on the left side and one on the right side.

Preferably, the camera 3 is secured onto the outside surface of the cabin 12 and is arranged in the place of a rear-view mirror and it is part of a so-called mirror replacement system. Mirror replacement systems usually has cameras 3 with a field of view that is wide enough to encompass the front wheels 2, the rear wheels 2 and the area behind the vehicle. Thus, the same camera 3 may be used for simultaneous observation of two or more wheels. Alternatively, one camera with a narrower field of view may be arranged for each wheel 2. The arrow shows the normal travel direction T of the vehicle 1 along its longitudinal axis. The vehicle 1 moves along this travel direction when the steered wheels 2 are in their neutral position. A rotation axis of the wheels 2 in the neutral position is nearly parallel to the road surface, more specifically it is offset from parallel by the camber angle. Said rotation axis is nearly perpendicular to the travel direction T, more specifically it is offset from perpendicular by the toe angle. The steered wheels 2 are steered by turning them around a steering axis. Said steering axis is generally vertical, more specifically it is offset from vertical by the caster angle.

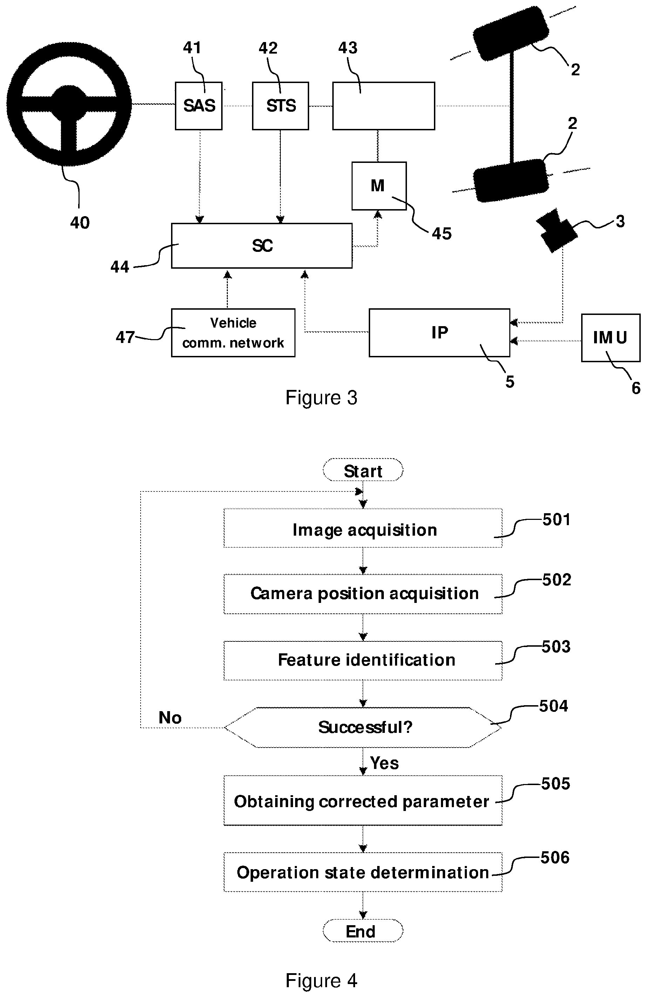

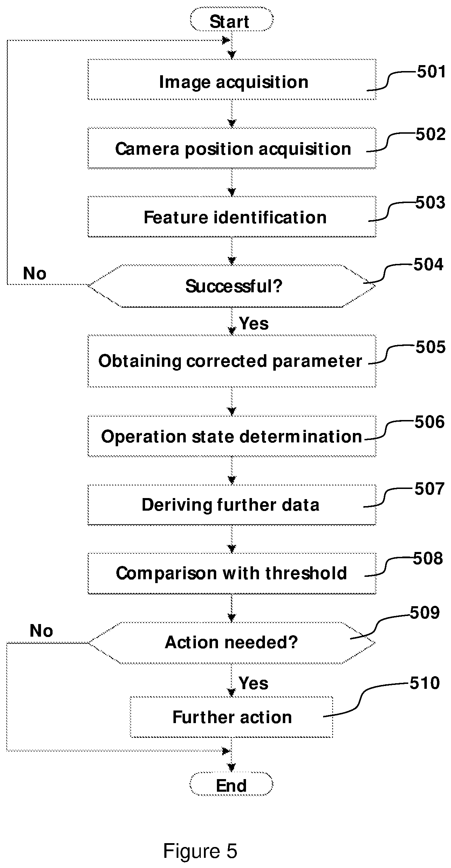

The system according to the invention is configured for performing the method described in detail with relation to Figures 4 and 5.

Figures 2A-2B illustrate a prior art solution for determining steering angle of a steered wheel. The steering angle is 20° in Figure 2A and 30° in Figure 2B. According to the prior art solution, an ellipse is fitted onto a visible portion of the outer edge of a rim of the observed steered wheel 2 and subsequently determining some parameters of the ellipse, particularly the length of the minor axis b and an angle ϕ formed between the major axis of the ellipse and a reference direction. In the prior art solution, the only considered motion of the wheel 2 is its rotation around its steering axis - the possible motion of the camera (not shown in these Figures) is completely disregarded. Accordingly, the prior art method determines the steering angle based on correlation between the minor axis and said angle ϕ of an ellipse of an actual image and corresponding parameters on a measurement image. Since a fixed relative position of the wheel 2 and the camera is postulated, the major axis does not change significantly, but changes in the angle ϕ and changes in the minor axis b correlate well with changes of the steering angle. However, dynamic maneuvers of a large vehicle 1, especially a lorry cause significant horizontal and some vertical movement of the camera relative to the wheel 2 and thus the prior art method provides insufficient accuracy during movement.

Figure 3 shows a block diagram of a preferred embodiment of the system according to the invention with its connections with further elements of a steering system. The system according to the invention comprises a camera 3 for recording images of at least one wheel 2, wherein said camera 3 is secured to the vehicle; an image processing unit 5 for processing said images, wherein said processing unit 5 is in data communication with the camera 3. The system further comprises means 6 for determining an actual position of the camera 3 relative to the wheel. In this embodiment, the means 6 are an inertial measurement unit that is separate from the image processing unit 5, though it may be any other means suitable for position and/or orientation determination, such as a LIDAR device or proximity sensors, or it may be integrated into the image processing unit 5 when the position/orientation of the camera 3 is to be determined on the basis of the images taken by the camera 3. The processing unit 5 is configured for performing the method according to the invention.

In the preferred embodiment shown in Figure 3, the processing unit 5 is in data communication with a steering controller 44 that controls the operation of at least one actuator 45 that is in mechanical connection with the steered wheels 2 via one or more intermediate mechanical elements 43, such as a rack and pinion mechanism, rods, joints etc. The processing unit 5 may be integrated into the steering controller 44. The steering controller 44 operates said actuator(s) 45 based on a steering demand that is either provided by a remote or on-board computer in the case of autonomous road vehicles, or by a steering wheel 40 or other similar control means operated by a user. The actuator(s) are usually electric or hydraulic actuators.

In so-called steer-by-wire solutions, there is no mechanical connection between the steering wheel 40 and the steered wheels 2 and thus the steering demand is determined on the basis of only the angular position of the steering wheel 40 that is measured by a steering angle sensor 41. In more common power assisted steering solutions, the steering wheel 40 is in mechanical connection with the steered wheels 2 via a steering column and the steering demand is determined on the basis of the angular position of the steering wheel 40 measured by a steering angle sensor 41 and the torque applied to the steering column measured by a steering torque sensor 42.

In the embodiment show in Figure 3, at least the steering angle of the steered wheels 2 is observed by the camera 3 and the processing unit 5 is connected to (or integrated into) the steering controller 44 so that the steering controller may correct the steering angle of the steered wheels 2 according to the observed steering angle. This is especially important when the steering deadband has been increased to a significant level through long-term wear and tear of the mechanical steering elements, or when mechanical properties of the steering system have been altered during maintenance works, replacement or adjustment of mechanical elements 43. A human driver may routinely compensate such changes in steering properties, but autonomous vehicles need an end-to-end monitoring system to do the same.

Figure 4 shows a flow chart of a preferred variant of the method according to the invention. The method according to the invention is equally suitable for monitoring one or more steered or unsteered wheels of a vehicle. The method comprises an image acquisition step 501, a camera position acquisition step 502, a feature identification step 503, at least one correction step 505 and a step 506 of determining an operation state of an observed wheel.

The image acquisition step 501 comprises recording at least one image of the wheel(s) to be observed by a digital camera. The camera is preferably secured to the vehicle, preferably externally to the vehicle cabin. The actual position of the camera relative to the wheel is acquired 502 by either a further sensor and/or based on the image recorded by said camera.

The sensor may be a LIDAR device that is directed to the external environment and/or at least one proximity sensor of ultrasonic, electric, magnetic, or electromagnetic type and/or an inertial measurement unit that comprises one or more of at least one accelerometer, at least one gyroscope, and at least one magnetometer. The sensor may be either fixed to the camera thus measuring the position of the camera directly or fixed to the vehicle cabin at a different location. In the latter case, known geometric parameters of the cabin and the known arrangement of the camera and the sensor thereon are used to calculate the position of the camera. If the camera position is acquired via the sensor, it may be performed before, after, or preferably simultaneously with the image acquisition 501.

Camera position acquisition 502 based on an image taken by the camera may be performed based on several different features identified on the picture. The rim of the wheel and most of the outer edge of the tire are circular in reality and thus they appear as an ellipse when looked at from a direction that is not coincident with the axis of the wheel. For a given distance of the camera from the center of the observed circle or ellipse the diameter of the circle has identical length with the major axis of the ellipse independent of the view direction. This fact may be used for determining the exact actual distance of the camera from the center of the wheel if the actual physical diameter of the wheel rim or tire is determined in advance.

Alternatively, or additionally visible features of an external environment are identified and these identified features are used for determining a road plane as a reference for movement of the camera relative to the wheel. Said visible features may be for example a visible horizon, a roadside feature such as a guard rail or columns, a road feature such as a side-line, lane markings or other road surface markings and a contact region between the road surface and the tire. The orientation of the camera relative to the road plane may also be determined by comparing sharpness of different portions of the image, especially if imaging optics of the camera provide a relatively low depth of field, because in different positions of the camera, different portions of the image (relative to the image frame) will appear sharply. This method may be applied for a single camera or more cameras simultaneously for more accurate results. After determining the position and/or orientation of the camera relative to external features, a reduced model of the vehicle may be used for determining the actual position of the camera relative to the observed wheel.

Furthermore, when more than one wheels and/or other visible features of the chassis of the vehicle are present within the same image frame, the known physical distances and positions of said wheels and other features may be used for determining the position of the camera relative to the observed wheels. Preferably one or more unsteered wheels are used for determining the position of the camera relative to the wheels. Alternatively, visible features of the chassis may be used for determining movement of the camera relative to the chassis, especially when the vehicle cabin is movable relative to the chassis. Said visible features of the chassis may be well defined visible edges of certain components fixed to the chassis, e.g., of the fuel tanks, or markers arranged at visible portions of the chassis. Said markings may be simple geometric shapes that are curved or rectilinear, preferably rectilinear, or other special markings designed to be easily recognizable by machine vision, preferably a QR code or other similar visual marking. The markings may be applied onto the chassis by any known method, e.g., via a sticker or spray-painting through a mask.

The feature identification step 503 may be performed before, after or simultaneously with the camera position acquisition step 502. Feature identification 503 comprises the identification of one or more visual features of the observed wheel on the recorded image, especially using edge detection and ellipse detection methods. Edge detection may be performed for example according to the Canny method, other first-order methods, or second order methods. Ellipse detection may be performed for example by Hough transform based methods, least squares-based methods, genetic algorithms based methods, or hybrid ellipse detection methods.

It is possible that an anomaly occurs during image acquisition 501, camera position acquisition 502 or feature identification 503 due to anomalous lighting conditions, anomalous movement of the vehicle or the camera, or vibrations etc. Therefore, the method according to the invention preferably also comprises a step 504 of checking the success of the feature identification for example by checking if certain features were successfully detected, their detection error is below a predetermined threshold, or a parameter of the detected feature is within realistic limits. The success checking step 504 is optional, because it is not necessary when the image acquisition 501 and camera position acquisition 502 methods are sufficiently reliable. Said reliability of the image acquisition 501 and camera position acquisition 502 steps may be increased by using sensors that are themselves more reliable, using an artificial illumination of the features to be detected, preferably a monochrome illumination, fluorescent dyes at features to be detected and a corresponding color filter at the camera and/or shorter exposure times (faster shutter speeds).

The identification step 503 preferably comprises identifying an ellipse representing the outer rim of the wheel, an ellipse representing the outer edge of the tire and/or a straight line representing the contact surface of the road and the tire. Alternatively, when visible markings are arranged on the wheel or on the tire, e.g., a bright or infrared-fluorescent dot or circle, ellipses corresponding to these markings may be detected. A dot or similar discrete marking on the wheel or tire performs a complete revolution for each revolution of the wheel and thus may show up as a complete ellipse on the image if the shutter speed is relatively low. For example, at a vehicle speed of 90 km/h, a standard sized truck tire completes about eight revolutions per second and thus a single dot will scribe a full ellipse on the image if the shutter speed is slower than 125 milliseconds. More than one dots arranged on the same circle or a full circle has the same effect for shorter shutter speeds. Dots on smaller tires provide ellipses even at slower speeds and/or faster shutter speeds (shorter shutter times).

In the present specification, the term "visible" is to be understood as "visible to the camera" and not necessarily visible to the human eye, and thus includes features discernible outside the visible spectrum in the infrared and/or ultraviolet ranges. Also, as explained above, a visible dot painted onto the tire may appear as a partial or full ellipse in the image frame when the vehicle is moving, thus a visible feature on the image may have a shape very different from the actual physical shape of said feature and should always be interpreted accordingly.

The identification step 503 preferably comprises determining at least one of the following parameters: a length of a major axis of an identified ellipse, a length of a minor axis of an identified ellipse, orientation of the identified ellipse relative to a reference direction within the image frame, an eccentricity of an identified ellipse, a length of a straight line at the portion of the tire contacting the road surface.

Depending on the actual purpose of the method, i.e., what operation state(s) of the wheel are to be determined, different parameters of the detected features should be obtained and corrected according to different sources of errors. The correction may be performed on the whole image, possibly before any feature detection 503, or later either on the detected features or on their relevant parameters.

Accordingly, obtaining the corrected parameter may comprise any one or more of the following: obtaining a corrected length of the major axis of an identified ellipse, obtaining a corrected length of the minor axis of an identified ellipse, obtaining a corrected eccentricity of the identified ellipse, obtaining a corrected orientation of the identified ellipse relative to a reference direction within the image frame, obtaining a corrected length of a straight line at the portion of the tire contacting the road surface.

In some special cases, obtaining 505 the corrected parameter is inherently simultaneous with the feature identification 503, e.g. when an ellipse is to be detected, the eccentricity of the detected ellipse may be a direct output parameter of the detection method. The eccentricity is independent of the distance between the camera and the wheel and thus may be considered to be a corrected parameter.

Obtaining 505 the corrected parameter may be performed by applying a correction to the picture before the feature detection, applying a correction to the detected features that may be in the form of a reduced image, applying a correction to parameters of the detected features, or a combination thereof. Each of the respective corrections are preferably applied on the basis of a predetermined neutral position of the camera relative to the wheel and on the basis of movement of the camera relative said predetermined position, and optionally on the basis of the respective features in the neutral position of both the camera and the wheel.

Said predetermined neutral position of the camera is preferably the position of the camera relative to the observed wheel when the vehicle is stationary and is not loaded. Said neutral position of the wheel is preferably the position of the wheel corresponding to a straight motion of the vehicle. When a steered wheel is observed, this corresponds to a steering angle of zero degrees. When an unsteered wheel of a trailer is observed by a camera arranged on the tractor of when an unsteered wheel of the tractor is observed by a camera arranged on the trailer, said neutral position of the wheel corresponds to an articulation angle of zero degrees. The same applies for trailers and further trailers of a road train. In the neutral position the rotation axis of the wheel is horizontal (minus the camber angle) and perpendicular to the travel direction T of the vehicle (minus the toe angle). Said neutral position of the wheels corresponds to a faultless state of said wheels and thus may serve as a basis for determining faulty conditions.

Obtaining the corrected parameter 505 may be performed in any manner known to a skilled person. The image recorded by the camera may be corrected according to perspective control methods already known in the field of digital image processing by appropriately stretching-compressing either the whole image or preferably only selected parts of the image. If edge detection is used for detecting features of the wheel, said perspective control methods may be performed on a reduced image only containing detected edges and pixels of zero value. Transforming the reduced image can be faster than transforming the raw image, because the zero pixels do not need to be transformed.

Preferably, the correction is applied to determined parameters of detected ellipses and thus only few values require transformation, and less computation is required. Preferably every length parameter, especially the length of the minor axis and the length of the major axis of detected ellipses are transformed according to the change of distance between the center of the observed wheel and the camera. If said distance in the neutral position of the camera is denoted d₀ and the distance in the moment of recording the image is denoted d₁, both the observed length of the major axis a and the length of the minor axis b shall be multiplied by d₁/d₀ to obtain corrected parameters.

The length of the major axis depends only on the distance between the center of the wheel and the camera and is independent of the view angle and thus it does not require further correction nor is it suitable for determining orientation of the wheel. The length of the minor axis b depends both on the distance of the center of the wheel and the camera, and on a view angle α formed between the plane of the wheel and a line connecting the camera to the center of the wheel. The plane of the wheel is defined by the circular feature of the wheel to be observed, e.g., the outer rim of the wheel or the outer edge of the tire. A circular feature of the wheel would appear on the image as a circle for perpendicular observation, i.e., when α=90°, while it appears as a straight line for parallel observation, i.e., when α=0°, while it appears as an ellipse with b/a = sin α for any other angle between 0° and 90°. The lengths of the axes of the ellipse, measured in pixels, are determined from the image and using the known optical parameters of the camera the view angle α may be determined according to the formula α = arcsin (b/a). For a fixed camera position, this view angle would only depend on the steering angle, but in real conditions on moving vehicles it is significantly affected by changes in the position of the camera and should be corrected accordingly.

The corrections are preferably calculated based on a predetermined mapping that creates a correspondence between directions within the image frame and directions within a 3D coordinate system fixed to neutral position of the vehicle. The change of the position of the camera relative to the wheel in the 3D coordinate system, i.e., the changes in view angle are used for transforming lengths within the image frame according to said mapping.

Due to practical considerations, e.g., the camera should not extend out of the vehicle body by too much, this view angle in the neutral positions of the camera and the wheel is relatively low, e.g., 5-15°. During dynamic operation, due to inertial and aerodynamic forces acting on the vehicle cabin, this view angle may change by as much as 10° without actually changing the operation state of the wheel, thus the measurement error could easily exceed the amount to be measured. According to a preferred variant of the method of the invention, the image, the detected features, or parameters of said features are transformed in accordance with the difference between the actual view angle and the neutral view angle. The actual view angle is determined based on the camera position determined in step 502 before determining 506 an operation state of the wheel.

When the operation state to be determined is the orientation of a steered wheel, preferably the orientation of the ellipse is also taken into consideration for determining said operation state, particularly the angle formed between the major axis of the ellipse and a reference direction on the image. Said reference direction on the image may be fixed either to the image frame, e.g., it may be the vertical direction, or alternatively the reference direction may be determined based on the picture, e.g., features of the vehicle chassis may be used for providing a reference direction, particularly the length direction of the vehicle.

Determining an operation state 506 of the wheel comprises one or more of the following: determining the orientation of the wheel, determining if the wheel is flat, punctured and/or loose.

According to a further preferred variant of the method according to the invention, the step 505 of obtaining the corrected parameter is integrated into the operation state determination step 506 by using a virtual 3D model of at least the camera and the wheel, wherein the position of the camera relative to the wheel is known from step 502 and thus the actual spatial orientation of the wheel is unequivocally determined on the basis of the 3D model and parameters detected on the uncorrected image. In this case the obtained corrected parameter is the determined operation state itself and thus steps 505 and 506 are integrated with each other. This virtual 3D model may be used for real-time calculation by an on-board computer of the vehicle or alternatively a look-up table is created in advance on the basis of the 3D model and stored in a memory of the on-board computer and thus the on-board computer may obtain the corrected parameter 505 by using said look-up table.

The operation state determination 506 comprises determining an operation state of the observed wheel based on at least one corrected parameter. Determining the orientation of the wheel is suitable for steering angle determination when the observed wheel is a steered wheel or for articulation angle determination when the observed wheel is an unsteered wheel of one of the trailers and the tractor observed from the other of the trailer and the tractor (or possibly two subsequent trailers if more than one trailer is connected to one another).

The operation state determined in step 506 may be used for several different purposes depending on what operation state was determined. Figure 5 shows a flowchart of a preferred variant of the method according to the invention, wherein the determined operation state is optionally used for deriving further data 507, comparing said further data or the operation state with a threshold 508, based on the comparison necessity of a further action is determined 509 and when deemed necessary, the further action is taken 510. Steps 501-506 are the same as shown and explained in detail in connection with Figure 4.

The method shown in Figure 5 may relate to steering angle determination and corresponding correction of the steering angle or warning the driver of a faulty operation of the steering system. In this case, the operation state determined in step 506 is the orientation of a steered wheel of the vehicle. The orientation of the steered wheel is used for determining the steering angle in step 507. After determining the actual steering angle, its difference from the steering demand received from the user or control computer is determined. The steering demand may be different for each steered wheel of the vehicle, usually according to the Ackermann steering geometry. The difference between the actual steering angle and the steering demand is the steering error that is present for example due to the inherent deadband of the steering mechanics and possible configuration errors or damages of the system.

The determined steering error is preferably compared 508 with a threshold value, e.g. a warning threshold and/or a correction threshold, and subsequently the necessity of a further action is determined in step 509. For example, when the steering error is lower than a correction threshold, e.g., 1°, no action is taken; when the steering error is larger than said correction threshold, a further action is taken 510, e.g., the actuator of the steering system is activated to correct the actual steering angle accordingly. Alternatively, or additionally when the steering error is larger than a warning threshold e.g., 10°, and this condition persists for some time, an audible, visible or haptic alert may be provided to the driver to warn him to the situation that the steering system may need maintenance soon and/or said warning is transmitted through data communication means to an external server. Alternatively, or additionally when the steering error exceeds a safe operation threshold, e.g., 15°, the vehicle is automatically parked at the next possible safe spot or possibly slowed down and parked to the roadside substantially immediately in order to stop operating the vehicle under unsafe conditions or to prevent committing a traffic offence, possibly also activating hazard lights of the vehicle and notifying a remote server of the vehicle breakdown for roadside assistance.

A further preferred embodiment of the method according to the invention shown in Figure 5 comprises determining anomalous shape, vertical position or horizontal position of a wheel or tire in step 506. An anomalous shape and vertical position of the tire may occur when the pressure inside the tire is too low, i.e., the tire is flat and thus it contacts the road surface on a larger area than normally and possibly the wheel is located significantly closer to the road surface in a vertically lower position than normally. Depending on the extent of flatness, these may be minor changes in determined parameters or in the case of total deflation of the tire due to puncture or blowout of the tire, these may be very significant changes up to the point where features of the tire may not even be identified.

When an anomalous shape of the tire is detected in step 506, e.g., it seems to be slightly deflated, the actual load applied to said wheel (both dynamic and static loads) may be taken into consideration for deriving further data 507, e.g., for estimating the tire pressure. The estimated tire pressure then may be compared with a threshold 508 and based on the comparison, the necessity of further action may be determined 509. Preferably more than one threshold is used for determining different further actions 510. For example an estimated tire pressure above a first threshold does not require any action, an estimated tire pressure between the first and a second threshold may provide a warning to the driver, to the control computer and/or to a remote computer indicating that manual inspection and/or inflation and/or replacement of the tire is advised, and pressure under the second threshold may initiate automatic maneuvers for parking the vehicle at the earliest possibility or stopping it at the roadside at the first safe option, especially when a catastrophic failure of a steered wheel is determined.

In order to determine if the wheel is loose, it is determined whether the wheel has a periodic lateral movement, i.e., a wobbling. This may be carried out by identifying periodic changes in any determined parameter of the wheel or by comparing images of the wheel recorded at different moments. The minor axis of the ellipse and the orientation of the ellipse are both expected to change periodically if the wheel is loose thus being suitable for determining looseness. Uneven balancing of the wheel may cause patchy wear of the tire and should be avoided. Balancing issues may be detected through periodic vertical motion of the wheel, e.g., by periodic changes of the observed length of the major axis of an ellipse of the wheel when it is observed from above, or a periodic movement of the center of said ellipse relative to a reference position.

The operation state determination 506 may comprise a comparison of subsequent images or parameters corresponding to said images. Preferably said images are recorded at time intervals corresponding at least a quarter revolution of the observed tire, e.g., images separated by time intervals of half revolutions to maximize the observable difference and thus increase accuracy. For vehicles with larger tires, e.g., lorries, at usual speeds of 90 km/h, and a camera recording images at 20 frames per second, directly subsequent images will be about 1/2 revolutions apart. At lower speeds or even larger wheels, every second, third or fourth etc. image may be used for comparison.

When a wobbling of the wheel is detected, preferably further analysis is performed in step 507 for determining the nature of the anomalous motion, e.g., looseness or unbalance of the wheel, the extent of said looseness or unbalance is preferably compared 508 with at least one corresponding threshold and necessity of further action is determined 509 and then a corresponding further action is taken 510, e.g., a warning is issued, or automatic maneuvers are taken.

According to a further preferred variant of the method of the invention, catastrophic failure of a tire (e.g., blowout) or of the wheel (e.g., a loose wheel breaking free of the vehicle) may be determined based on unsuccessful feature identification. For example, when certain features of the tire, especially a straight contact line with the road surface or an elliptic outer edge of the tire cannot be identified for several subsequent images, a catastrophic failure of the tire may be suspected. More specifically when the success check step 504 returns with failure several times in a row, a further step is performed for confirming whether a catastrophic failure occurred and its nature is determined preferably on the basis of signals of further sensors, e.g., a tire pressure monitoring system.

While the above examples were focused on large vehicles with at least four wheels, and especially lorries, the use of the method and system according to the invention is not limited to such vehicles. The number of wheels 2 may be as few as two, with only a single steered wheel 2, or may be much more. Thus the vehicle may even be a motorcycle or similar two wheeled vehicle, a three wheeled motor vehicle with either two front and one rear wheel or two rear and one front wheels, as well as a vehicle-combination with six, eight, ten or even more wheels 2, such as a tractor with a semitrailer or an agricultural tractor with an agricultural trailer, or a vehicle combination of more than two components, e.g. a tractor with two trailers in A-double or B-double configuration.

The method and the system according to the invention provide a simple and robust solution for monitoring wheels of a moving vehicle with improved accuracy. This improved accuracy makes it possible to determine steering angle and articulation angle more reliably so that these can be used for end-to end monitoring of automated vehicles and automated steering angle correction even at high speeds. The improved accuracy also serves as the basis of important safety functions, such as puncture detection or loose wheel detection, that would not be possible with prior art solutions.

## Claims

1. Method for monitoring at least one wheel (2) of a vehicle (1), said method comprising:
- acquiring (501) an image of said at least one wheel (2) of the vehicle (1) by using a camera (3) that is secured to the vehicle (1);
- identifying (503) at least one visual feature of the wheel (2) on the image;
- detecting at least one parameter of said at least one identified feature;
- determining (506) an operation state of the wheel (2) based on said parameter; **characterized in** further comprising
- determining (502) an actual position of the camera (3) relative to the wheel;
wherein determining (502) the actual position of the camera (3) is performed based on any one or more of the following:
- a signal of an inertial measurement unit;
- an image acquired by the camera, showing a portion of an external environment;
- a signal of a LIDAR device directed to an external environment; and/or
- at least one signal of at least one proximity sensor;
- obtaining (505) a corrected parameter on the basis of the actual position of the camera (3); and
- determining (506) an operation state of the wheel (2) based on the corrected parameter.

2. Method according to claim 1, wherein obtaining (505) the corrected parameter comprises one or more of:
- applying an image correction to the image before identifying the at least one visual feature;
- applying a feature correction to the identified feature before detecting the at least one parameter; or
- applying a parameter correction on the detected parameter.

3. Method according to any of the preceding claims, wherein determining (506) the operation state of the wheel (2) comprises determining the orientation of the wheel (2) relative to the vehicle (1).

4. Method according to any of the preceding claims, wherein determining (506) the operation state of the wheel (2) comprises determining puncture of the wheel (2).

5. Method according to any of the preceding claims, wherein determining (506) the operation state of the wheel (2) comprises determining looseness of the wheel (2).

6. Method according to any of the preceding claims, wherein said identification (503) step comprises identifying at least one of: a rim of the wheel (2), at least one optically detectable marking arranged on the wheel (2), a contact region between the wheel (2) and a road surface, an outer edge of the tire of the wheel (2).

7. Method according to any of the preceding claims, wherein said identification (503) step comprises fitting an ellipse onto the boundary between the edge of a rim of the wheel (2) or onto a shape scribed by a marking on the wheel (2), and the detected parameter is any of the following:
- the length of a major and/or minor axis of said ellipse; and/or
- an orientation of the major or minor axis of said ellipse.

8. Method according to any of the preceding claims, wherein the wheel (2) comprises a steered wheel and an actual steering angle is determined based on the determined orientation.

9. Method according to any of the preceding claims, wherein:
- the vehicle (1) comprises a tractor-trailer combination;
- the camera (3) is located on one of the tractor and the trailer; and
- acquiring an image of the at least one wheel (2) comprises acquiring an image of a wheel (2) of the other one of the tractor and the trailer.

10. Method according to claim 9, wherein:
- acquiring (501) an image of said wheel (2) comprises acquiring an image of an unsteered wheel; and
- an articulation angle of the trailer relative to the tractor is determined on the basis of the determined orientation of the wheel (2).

11. Method according to any one of the preceding claims, wherein the detected visual feature is the outer edge of a tire of the wheel.

12. System for monitoring at least one wheel (2) of a vehicle (1), said system comprising:
- a camera (3) for recording images of the at least one wheel (2), wherein said camera (3) is secured to the vehicle (1);
- a processing unit (5) for processing said images, wherein said processing unit (5) is in data communication with the camera (3),
- said processing unit (5) comprises a computer program having instructions that, when executed on the processing unit (5), cause the processing unit (5) to determining an operation state of the wheel (2) based on said processed images,
**characterized in that** further comprising
- means (6) for determining an actual position of the camera (3) relative to the wheel, wherein
- the means (6) for determining the actual position of the camera (3) comprise an image processor connected to the processing unit (5) for determining the actual position of the camera (3) based on images recorded by the camera (3) and visual features identified on said images, and
- said processing unit (5) comprises a computer program having instructions that, when executed on the processing unit (5), cause the processing unit (5) to perform the method according to at least one of claims 1-13.

13. System according to claim 12, wherein the means (6) for determining the actual position of the camera (3) comprise at least one of:
- a LIDAR device directed to an external environment; and/or
- at least one proximity sensor;
- an inertial measurement unit comprising one or more of: at least one accelerometer, at least one gyroscope, and at least one magnetometer.

14. System according to claims 12 or 13, wherein:
- the vehicle (1) comprises a tractor-trailer combination;
- the camera (3) is located on one of the tractor and the trailer; and
- acquiring an image of the at least one wheel (2) comprises acquiring an image of a wheel (2) of the other one of the tractor and the trailer.

15. Vehicle (1), having at least two wheels (2), **characterized by** comprising a system according to at least one of claims 12-14.

## Patentansprüche

1. Verfahren zur Überwachung mindestens eines Rades (2) eines Fahrzeugs (1), wobei das Verfahren Folgendes umfasst:
- Aufnehmen (501) eines Bildes des mindestens einen Rades (2) des Fahrzeugs (1) mittels einer am Fahrzeug (1) befestigten Kamera (3);
- Identifizieren (503) mindestens eines visuellen Merkmals des Rades (2) im Bild;
- Erfassen mindestens eines Parameters des genannten mindestens einen identifizierten Merkmals;
- Bestimmen (506) eines Betriebszustands des Rades (2) basierend auf diesem Parameter, **gekennzeichnet dadurch, dass** es weiterhin Folgendes umfasst:
- Ermitteln (502) der tatsächlichen Position der Kamera (3) relativ zum Rad;
wobei die Ermittlung (502) der tatsächlichen Position der Kamera (3) basierend auf einem oder mehrerer der Folgenden erfolgt:
- ein Signal einer Inertialmesseinheit;
- ein von der Kamera aufgenommenes Bild, das einen Teil der äußeren Umgebung zeigt;
- ein Signal eines LIDAR-Geräts, das an die äußere Umgebung gerichtet ist; und/oder
- mindestens ein Signal von mindestens einem Näherungssensor;
- Ermitteln (505) eines korrigierten Parameters basierend auf der tatsächlichen Position der Kamera (3); und
- Ermitteln (506) des Betriebszustands des Rades (2) basierend auf dem korrigierten Parameter.

2. Verfahren nach Anspruch 1, wobei das Ermitteln des korrigierten Parameters (505) ein oder mehrere der Folgenden umfasst:
- Anwenden einer Bildkorrektur auf das Bild vor der Identifizierung des mindestens einen visuellen Merkmals;
- Anwenden einer Merkmalskorrektur auf das identifizierte Merkmal vor der Detektion des mindestens einen Parameters; oder
- Anwenden einer Parameterkorrektur auf den detektierten Parameter.

3. Verfahren nach einem der vorhergehenden Ansprüche, wobei das Bestimmen (506) des Betriebszustands des Rades (2) das Bestimmen der Ausrichtung des Rades (2) relativ zum Fahrzeug (1) umfasst.

4. Verfahren nach einem der vorhergehenden Ansprüche, wobei das Bestimmen (506) des Betriebszustands des Rades (2) das Bestimmen eines Reifenschadens am Rad (2) umfasst.

5. Verfahren nach einem der vorhergehenden Ansprüche, wobei das Bestimmen (506) des Betriebszustands des Rades (2) das Bestimmen des Radspiels des Rades (2) umfasst.

6. Verfahren nach einem der vorhergehenden Ansprüche, wobei der Identifizierungsschritt (503) das Identifizieren mindestens eines der folgenden Elemente umfasst: eine Felge des Rades (2), mindestens eine optisch erkennbare Markierung auf dem Rad (2), eine Kontaktfläche zwischen dem Rad (2) und der Fahrbahnoberfläche, eine Außenkante des Reifens des Rades (2).

7. Verfahren nach einem der vorhergehenden Ansprüche, wobei der Identifizierungsschritt (503) das Anpassen einer Ellipse an die Grenze zwischen der Felge des Rades (2) oder an eine durch eine Markierung auf dem Rad (2) vorgegebene Form umfasst und der erfasste Parameter einer der folgenden ist:
- die Länge der Haupt- und/oder Nebenachse der Ellipse; und/oder
- die Orientierung der Haupt- oder Nebenachse der Ellipse.

8. Verfahren nach einem der vorhergehenden Ansprüche, wobei das Rad (2) ein gelenktes Rad ist und der tatsächliche Lenkwinkel basierend auf der ermittelten Orientierung bestimmt wird.

9. Verfahren nach einem der vorhergehenden Ansprüche, wobei:
- das Fahrzeug (1) eine Sattelzugkombination umfasst;
- die Kamera (3) an der Zugmaschine oder am Anhänger angebracht ist; und
- das Aufnehmen eines Bildes des mindestens einen Rades (2) das Aufnehmen eines Bildes eines Rades (2) des anderen Teils der Zugmaschine oder des Anhängers umfasst.

10. Verfahren nach Anspruch 9, wobei:
- das Aufnehmen (501) eines Bildes des Rades (2) das Aufnehmen eines Bildes eines nicht gelenkten Rades umfasst; und
- der Gelenkwinkel des Anhängers relativ zur Zugmaschine auf der Grundlage der ermittelten Orientierung des Rades (2) bestimmt wird.

11. Verfahren nach einem der vorhergehenden Ansprüche, wobei das erfasste visuelle Merkmal der Außenrand eines Reifens des Rades ist.

12. System zur Überwachung mindestens eines Rades (2) eines Fahrzeugs (1), wobei das System Folgendes umfasst:
- eine Kamera (3) zur Aufnahme von Bildern des mindestens einen Rades (2), wobei die Kamera (3) am Fahrzeug (1) befestigt ist;
- eine Verarbeitungseinheit (5) zur Verarbeitung der Bilder, wobei die Verarbeitungseinheit (5) mit der Kamera (3) in Datenkommunikation steht,
- die Verarbeitungseinheit (5) ein Computerprogramm mit Anweisungen umfasst, die, wenn sie auf der Verarbeitungseinheit (5) ausgeführt werden, die Verarbeitungseinheit (5) veranlassen, den Betriebszustand des Rades (2) auf Grundlage der verarbeiteten Bilder zu bestimmen,
**dadurch gekennzeichnet, dass** sie ferner umfasst:
- Mittel (6) zur Bestimmung der tatsächlichen Position der Kamera (3) relativ zum Rad, wobei
- die Mittel (6) zur Bestimmung der tatsächlichen Position der Kamera (3) einen mit der Verarbeitungseinheit (5) verbundenen Bildprozessor umfassen, der die tatsächliche Position der Kamera (3) auf Grundlage der von der Kamera (3) aufgenommenen Bilder und der auf diesen Bildern identifizierten visuellen Merkmale bestimmt, und
- die Verarbeitungseinheit (5) ein Computerprogramm mit Anweisungen umfasst, die, wenn sie auf der Verarbeitungseinheit (5) ausgeführt werden, die Verarbeitungseinheit (5) veranlassen, das Verfahren gemäß mindestens einem der Ansprüche 1-13 durchzuführen.

13. System nach Anspruch 12, wobei die Mittel (6) zur Bestimmung der tatsächlichen Position der Kamera (3) mindestens eines der folgenden Elemente umfassen:
- ein auf die Umgebung gerichtetes LIDAR-Gerät; und/oder
- mindestens einen Näherungssensor;
- eine Inertialmesseinheit, die mindestens eines der folgenden Elemente umfasst: mindestens einen Beschleunigungsmesser, mindestens ein Gyroskop und mindestens ein Magnetometer.

14. System nach Anspruch 12 oder 13, wobei:
- das Fahrzeug (1) eine Sattelzugkombination umfasst;
- die Kamera (3) an der Zugmaschine oder am Anhänger angebracht ist; und
- die Aufnahme eines Bildes des mindestens einen Rades (2) die Aufnahme eines Bildes eines Rades (2) des anderen Rades der Zugmaschine oder des Anhängers umfasst.

15. Fahrzeug (1) mit mindestens zwei Rädern (2), **gekennzeichnet durch** ein System nach mindestens einem der Ansprüche 12 bis 14.

## Revendications

1. Procédé de surveillance d'au moins une roue (2) d'un véhicule (1), ledit procédé comprenant :
- l'acquisition (501) d'une image de ladite roue (2) du véhicule (1) au moyen d'une caméra (3) fixée au véhicule (1) ;
- l'identification (503) d'au moins une caractéristique visuelle de la roue (2) sur l'image ;
- la détection d'au moins un paramètre de ladite caractéristique identifiée ;
- la détermination (506) de l'état de fonctionnement de la roue (2) à partir dudit paramètre ; **caractérisé en outre par** :
- la détermination (502) de la position réelle de la caméra (3) par rapport à la roue ;
la détermination (502) de la position réelle de la caméra (3) étant effectuée à partir d'un ou plusieurs des éléments suivants :
- un signal d'une centrale inertielle ;
- une image acquise par la caméra, montrant une portion de l'environnement extérieur ;
- un signal d'un dispositif LIDAR dirigé vers l'environnement extérieur. et/ou
- au moins un signal provenant d'au moins un capteur de proximité ;
- l'obtention (505) d'un paramètre corrigé sur la base de la position réelle de la caméra (3) ; et
- la détermination (506) d'un état de fonctionnement de la roue (2) sur la base du paramètre corrigé.

2. Procédé selon la revendication 1, dans lequel l'obtention (505) du paramètre corrigé comprend une ou plusieurs des étapes suivantes :
- application d'une correction d'image à l'image avant l'identification d'au moins une caractéristique visuelle ;
- application d'une correction de caractéristique à la caractéristique identifiée avant la détection d'au moins un paramètre ; ou
- application d'une correction de paramètre au paramètre détecté.

3. Procédé selon l'une quelconque des revendications précédentes, dans lequel la détermination (506) de l'état de fonctionnement de la roue (2) comprend la détermination de l'orientation de la roue (2) par rapport au véhicule (1).

4. Procédé selon l'une quelconque des revendications précédentes, dans lequel la détermination (506) de l'état de fonctionnement de la roue (2) comprend la détermination de la présence d'une crevaison de la roue (2).

5. Procédé selon l'une quelconque des revendications précédentes, dans lequel la détermination (506) de l'état de fonctionnement de la roue (2) comprend la détermination du jeu de la roue (2).

6. Procédé selon l'une quelconque des revendications précédentes, dans lequel l'étape d'identification (503) comprend à identifier au moins un des éléments suivants : une jante de la roue (2), au moins un marquage optiquement détectable disposé sur la roue (2), une zone de contact entre la roue (2) et une surface de route, le bord extérieur du pneu de la roue (2).

7. Procédé selon l'une quelconque des revendications précédentes, dans lequel l'étape d'identification (503) comprend à ajuster une ellipse à la limite entre le bord de la jante de la roue (2) ou à une forme tracée par un marquage sur la roue (2), le paramètre détecté étant l'un des suivants :
- la longueur d'un axe majeur et/ou mineur de ladite ellipse ; et/ou
- l'orientation de l'axe majeur ou mineur de ladite ellipse.

8. Procédé selon l'une quelconque des revendications précédentes, dans lequel la roue (2) comprend une roue directrice et l'angle de braquage réel est déterminé à partir de l'orientation déterminée.

9. Procédé selon l'une quelconque des revendications précédentes, dans lequel :
- le véhicule (1) comprend un ensemble tracteur-remorque ;
- la caméra (3) est située sur le tracteur ou la remorque ; et
- l'acquisition d'une image d'au moins une roue (2) comprend l'acquisition d'une image d'une roue (2) de l'autre tracteur ou de la remorque.

10. Procédé selon la revendication 9, dans lequel :
- l'acquisition (501) d'une image de ladite roue (2) comprend l'acquisition d'une image d'une roue non directionnelle ; et
- l'angle d'articulation de la remorque par rapport au tracteur est déterminé en fonction de l'orientation déterminée de la roue (2).

11. Procédé selon l'une quelconque des revendications précédentes, dans lequel la caractéristique visuelle détecté est le bord extérieur du pneu de la roue.

12. Système de surveillance d'au moins une roue (2) d'un véhicule (1), ledit système comprenant :
- une caméra (3) pour l'enregistrement d'images de la ou des roues (2), ladite caméra (3) étant fixée au véhicule (1) ;
- une unité de traitement (5) pour le traitement desdites images, ladite unité de traitement (5) étant en communication de données avec la caméra (3),
- ladite unité de traitement (5) comprend un programme informatique dont les instructions, lorsqu'elles sont exécutées sur l'unité de traitement (5), permettent à cette dernière de déterminer l'état de fonctionnement de la roue (2) à partir desdites images traitées,
**caractérisée en ce qu'**elle comprend en outre :
- des moyens (6) pour déterminer la position réelle de la caméra (3) par rapport à la roue, lesquels :
- les moyens (6) de détermination de la position réelle de la caméra (3) comprennent un processeur d'images connecté à l'unité de traitement (5) pour déterminer la position réelle de la caméra (3) à partir des images enregistrées par la caméra (3) et des caractéristiques visuelles identifiées sur lesdites images, et
- ladite unité de traitement (5) comprend un programme informatique dont les instructions, lorsqu'elles sont exécutées sur l'unité de traitement (5), permettent à cette dernière de mettre en œuvre le procédé selon au moins une des revendications 1 à 13.

13. Système selon la revendication 12, dans lequel les moyens (6) de détermination de la position réelle de la caméra (3) comprennent au moins un des éléments suivants :
- un dispositif LIDAR orienté vers l'environnement extérieur ; et/ou
- au moins un capteur de proximité ;
- une centrale inertielle comprenant un ou plusieurs des éléments suivants : au moins un accéléromètre, au moins un gyroscope et au moins un magnétomètre.

14. Système selon les revendications 12 ou 13, dans lequel :
- le véhicule (1) comprend un ensemble tracteur-remorque ;
- la caméra (3) est située sur l'un des tracteurs et l'autre sur la remorque ; et
- l'acquisition d'une image d'au moins une roue (2) comprend l'acquisition d'une image d'une roue (2) de l'autre tracteur ou de la remorque.

15. Véhicule (1), comportant au moins deux roues (2), **caractérisé en ce qu'**il comprend un système selon au moins une des revendications 12 à 14.
